# EUROPÄISCHE PATENTSCHRIFT

(11) **EP 0 647 499 B1**
(45) Veröffentlichungstag und Bekanntmachung des Hinweises auf die Patenterteilung: **18.09.1996**
(21) Anmeldenummer: 94120640.1
(22) Anmeldetag: 15.07.1992
(51) Int. Cl.: B23K 37/04, B25H 1/02, B25B 5/10, B25B 5/16, F16B 2/16

(54) **Schraubzwinge**
Pivoting and sliding jack clamp
Serre-joints

(30) Priorität: 15.11.1991 DE 9114218 U; 15.11.1991 DE 9114219 U; 15.11.1991 DE 9114220 U
(43) Veröffentlichungstag der Anmeldung: 12.04.1995
(62) Teilanmeldung aus: 92112045.7
(73) Patentinhaber: DEMMELER MASCHINENBAU GmbH & Co. KG, D-87751 Heimertingen (DE)
(72) Erfinder: Demmeler, Ludwig, D-87737 Boos (DE); Demmeler, Johannes, D-87737 Boos (DE)
(74) Vertreter: Hutzelmann, Gerhard

(56) Entgegenhaltungen:
- DE-U- 8 705 546
- DE-U- 9 015 218
- GB-A- 818 503
- US-A- 3 599 960
- DATABASE WPI Week 8450 1.Februar 1984 Derwent Publications Ltd., London, GB; AN 83-843329 & SU-A-996 753 (GOMSELMASH PROD ASS) , 25.Februar 1983
- DATABASE WPI Week 8450 1.Februar 1984 Derwent Publications Ltd., London, GB; AN
- 83-843329 & SU-A-996 753 (GOMSELMASH PROD ASS) , 25.Februar 1983

## Beschreibung

Die Erfindung bezieht sich auf eine Schraubzwinge, mit einer einen kreisförmigen, an die Bohrungen eines Tisches oder dergleichen Werkstückes angepaßten Querschnitt aufweisenden Längsstrebe und einer an einer Querstrebe angeordneten Schraubenspindel zum Feineinstellen und Aufbringen der Spannkraft.

Schraubzwingen sind in verschiedenen Ausgestaltungen bekannt, dabei ist im allgemeinen an einer Längsstrebe eine Querstrebe fest angeordnet, während eine zweite Querstrebe verschieb und verkantbar auf der Längsstrebe angeordnet ist. An der verschiebbar gelagerten Querstrebe ist dann zusätzlich eine Schraubenspindel angeordnet (siehe z.B. DE-U-8 705 546).

Der Erfindung liegt die Aufgabe zugrunde eine Schraubzwinge vorzuschlagen, die lediglich mit einer Querstrebe ausgerüstet ist und die über die Längsstrebe unmittelbar mit einem weiteren Werkstück, wie beispielsweise einem Tisch, zusammenwirkt.

Diese Aufgabe wird erfindungsgemäß dadurch gelöst, daß die Querstrebe zweiteilig ausgebildet ist, mit einem äußeren Stützrohr und einer inneren darin längsverschiebbar gelagerten Strebe, welche die Schraubenspindel trägt, daß die Querstrebe am Ende der Längsstrebe fest angeordnet ist und mit dieser einen stumpfen Winkel von etwa 100° einschließt.

Insbesondere bei der Kombination einer derart ausgebildeten Schraubzwinge mit einem mit Durchgangsbohrungen versehenen Werkstück wie z.B. einem Tisch ist ein einfaches und trotzdem genaues Spannen von Bauteilen ermöglicht. Bei einer Schraubzwinge biegt sich bekanntlich die Längsstrebe unter Belastung durch, wodurch dann die eingespannten Teile zu kippen versuchen.
Beim Durchbiegen der in einer Durchgangsbohrung gehaltenen Längsstrebe kann sich nun bei der erfindungsgemäßen Schraubzwinge die Querstrebe längen und es entsteht keine auf das eingespannte Teil seitlich einwirkende Kraft.

Dadurch, daß die Querstrebe am Ende der Längsstrebe fest angeordnet ist und mit dieser einen Winkel von etwa 100° einschließt, tritt innerhalb der beiden Teile der Querstrebe praktisch keine Reibungskraft auf, so daß sich die Querstrebenlänge sehr leicht an die gegebene Durchbiegung der Längsstrebe anpaßt.

Sehr vorteilhaft ist es, wenn erfindungsgemäß innerhalb der Querstrebe eine Rückholfeder angeordnet ist, welche im unbelasteten Zustand die Strebe in der eingefahrenen Stellung innerhalb des Stützrohres hält.

Damit kehrt die verschiebbare Strebe immer in ihre Ausgangslage zurück, so daß kein zusätzliches Justieren notwendig ist.

Für die Ausgestaltung der erfindungsgemäßen Schraubzwinge hat es sich auch als vorteilhaft erwiesen, wenn die innere Strebe der Querstrebe mit einer langlochförmigen Ausnehmung versehen ist, in welche ein im Stützrohr befestigter Stift eingreift und damit die Querbewegung der inneren Strebe begrenzt.

Eine besonders einfache und funktionssichere Anordnung der Rückholfeder ist erfindungsgemäß dadurch gegeben, daß innerhalb der langlochförmigen Ausnehmung eine Druckfeder angeordnet ist, welche als Rückholfeder dient.

Sehr vorteilhaft ist es auch, wenn erfindungsgemäß an der Querstrebe eine Klemmeinrichtung zum Festlegen der auf der Längsstrebe verschiebbar gelagerten Querstrebe an der Längsstrebe vorgesehen ist.

Damit ist es möglich, Schraubzwingen mit beliebig langen Längsstreben einzusetzen, weil die benötigte Länge leicht zwischen Längs- und Querstrebe einstellbar ist.

In der Zeichnung ist die Erfindung anhand mehrerer Ausführungsbeispiele veranschaulicht. Dabei zeigen:
- Fig. 1: eine schaubildliche Darstellung eines Tisches mit einer Vielzahl zylindrischer Duchgangsbohrungen sowohl in der Tischplatte als auch in den seitlichen Wangen,
- Fig.2: eine Ansicht einer winkelförmigen Stütze, die über einen Bolzen am Tisch befestigt ist,
- Fig.3: eine Ansicht einer C-förmigen Stütze, die mit einem ihrer kürzeren Schenkel auf der Tischplatte aufliegt,
- Fig.4: mehrere hintereinander angeordnete winkelförmige Stützen, die an der Tischplatte befestigt sind,
- Fig.5: ein Schaubild einer Schraubzwinge mit einer rohrförmigen Längsstrebe und einer Querstrebe die aus einem rechteckförmigen Stützrohr und einer im Querschnitt an dieses angepaßten Strebe besteht,
- Fig.6: eine Teilansicht der Querstrebe im aufgebrochenen Zustand und
- Fig.7: eine Ansicht einer weiteren Schraubzwinge, die mit ihrer Längsstrebe in einer Durchgangsbohrung des Tisches sitzt und deren Querstrebe verschiebbar auf der Längsstrebe angeordnet ist.

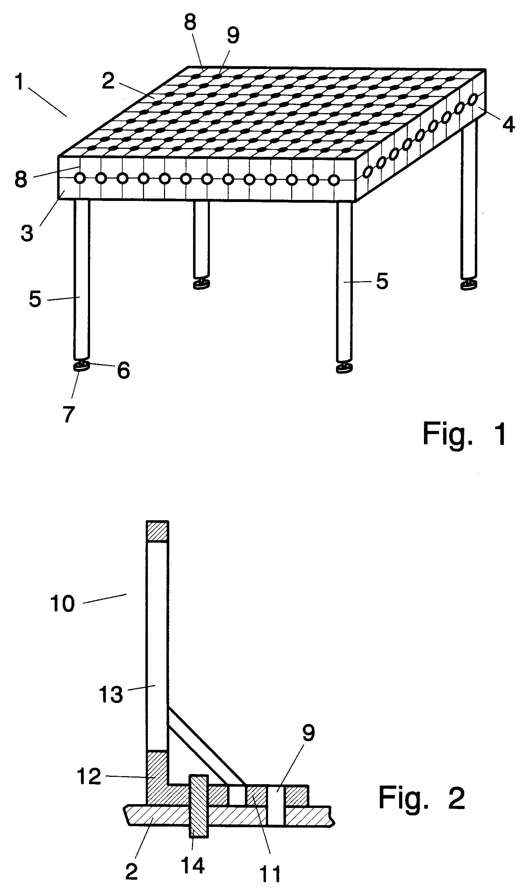

Mit 1 ist in Fig.1 ein Tisch bezeichnet, der eine Tischplatte 2 und daran angeordnete, senkrecht nach unten stehende seitliche Wangen 3 und 4 aufweist.

An der Unterseite der Tischplatte 2 sind vier Beine 5 angeschraubt, welche an ihrem unteren Ende mit über Gewindspindeln 6 höhenverstellbaren Füßen 7 versehen sind.

Durch Auswechseln der Beine und Einstellen der Füße ist eine große Anpassungsfähigkeit des Tisches an unterschiedlichste Anforderungen gegeben.

Die Tischplatte 2 ist mit einem Rasterliniennetz versehen, dessen Rasterlinien 8 von der jeweiligen Außenkante und untereinander einen gleichbleibenden Abstand von 10 cm aufweisen. An den Kreuzungspunkten dieser Rasterlinien 8 ist jeweils eine Durchgangsbohrung 9 vorgesehen, welche im rechten Winkel zur Tischplattenoberfläche verläuft. Diese Rasterlinien 8 gehen auch über die Kanten der Tischplatte 2 in die seitlichen Wangen 3 und 4 über, wo ebenfalls Durchgangsbohrungen 9 vorgesehen sind. An den Rasterlinien 8 können Markierungen in Form von fortlaufenden Zahlen oder Maßangaben angebracht sein.

In Fig. 2 ist auf die Tischplatte 2 eine winkelförmige Stütze 10 aufgesetzt, welche zwei im rechten Winkel zueinander angeordnete Schenkel 11 und 12 aufweist. Im einen Schenkel 11 sind ebenfalls Durchgangsbohrungen 9 vorgesehen, die mit gegenüber denen der Tischplatte halber Teilung angeordnet sind, d.h. einen gegenseitigen Abstand von 5 cm aufweisen. Im anderen Schenkel 12 ist dagegen eine langlochförmige Durchbrechung 13 vorgesehen, deren Breite dem Durchmesser der Durchgangsbohrungen 9 entspricht. Mit dem Schenkel 11 liegt die winkelförmige Stütze 10 auf der Tischplatte auf und ist mit dieser durch einen nicht näher dargestellten Bolzen 14 verbunden.

An einer so angeordneten Stütze können nun Bauteile zum Aufbauen auch komplizierter Schweißkonstruktionen sicher und maßhaltig befestigt werden.

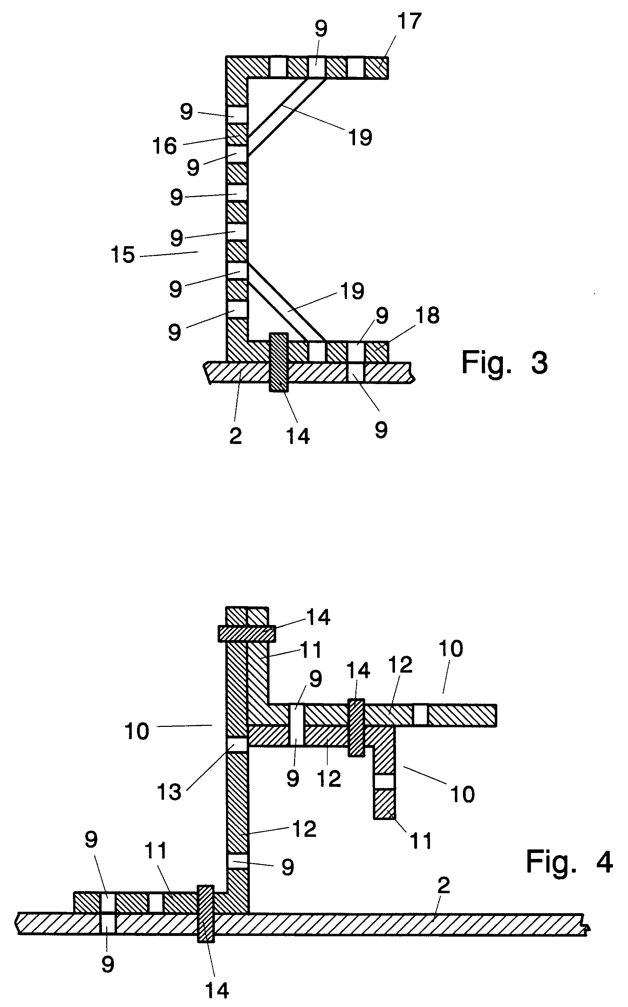

Beim Ausführungsbeispiel nach Fig.3 sitzt auf der Tischplatte 2 eine C-förmig ausgebildete Stütze 15, die in allen drei Schenkeln 16, 17 und 18 mit Durchgangsbohrungen 9 versehen ist. Die einzelnen zueinander benachbarten Schenkel sind mit Schrägstreben 19 verbunden, wodurch insbesondere bei größeren Stützen eine große Steifigkeit gewährleistet ist.

Mit einer solchen Stütze kann auch eine Festlegung von Bauteilen von oben her erfolgen, so daß auch bei verhältnismäßig großer Höhe eine sichere Festlegung in allen drei Richtungen erfolgen kann.

In Fig.4 ist gezeigt, wie mehrere winkelförmige Stützen 10 hintereinander angeordnet und jeweils mit Bolzen 14 miteinander verbunden sind. Dabei können die unterschiedlichsten Stützengrößen und Ausgestaltungen vorgesehen werden, um auch komplizierte Aufbauten zu ermöglichen.

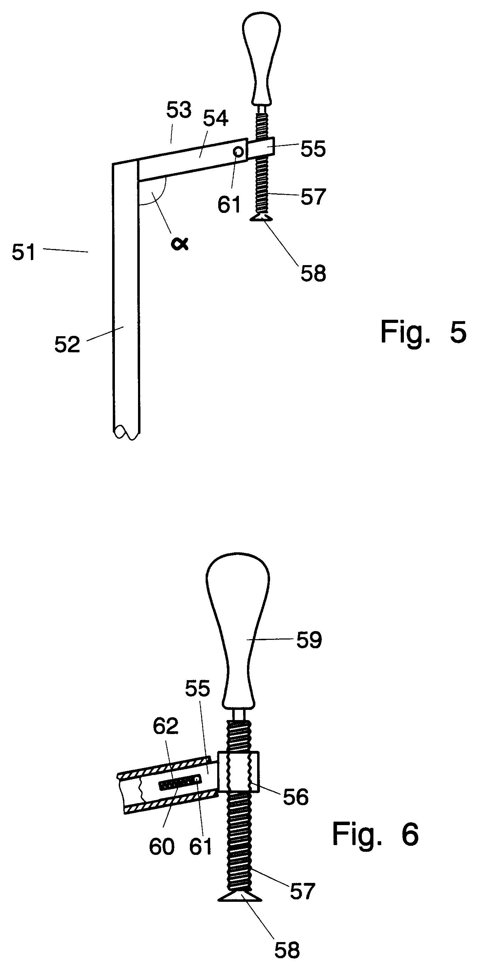

Mit 51 ist in Fig.5 eine Schraubzwinge bezeichnet, die mit einer Längsstrebe 52 ausgerüstet ist, welche von einem mit kreisförmigem Querschnitt versehenen Rohr gebildet wird. Am einen Ende dieser Längsstrebe 52 ist eine Querstrebe 53 angeordnet, die aus einem im Querschnitt rechteckigen Stützrohr 54 und einer darin längsverschiebbar gelagerten Strebe 55 besteht, wobei diese Strebe 55 in ihrem Querschnitt an die Innenabmessungen des Stützrohres 54 angepaßt ist.Die Querstrebe 53 bzw. das Stützrohr 54 schließt mit der Längsstrebe 52 einen Winkel α von 100 bis 102° ein.

Am von der Längsstrebe abgewandten Ende der Strebe 55 ist eine parallel zur Längsstrebe 52 verlaufende Gewindebohrung 56 angeordnet, in welche eine Schraubenspindel 57 eingeschraubt ist. Diese Schraubenspindel 57 trägt an ihrem unteren Ende eine drehbar gelagerte kreisförmige Platte 58 und am oberen Ende einen Drehgriff 59. In ihrem im Stützrohr 54 steckenden Abschnitt weist die Strebe 55 eine in ihrer Längsrichtung verlaufende langlochförmige Ausnehmung 60 auf, in welche ein Stift 61 eingreift, der im Stützrohr 54 gelagert ist und die Längsbewegungen der Strebe begrenzt. An diesem Stift 61 einerseits und dem inneren Ende der langlochförmigen Ausnehmung 60 andererseits greift eine Druckfeder 62 an, die als Rückholfeder für die Strebe dient und diese in ihre eingefahrene Position drückt.

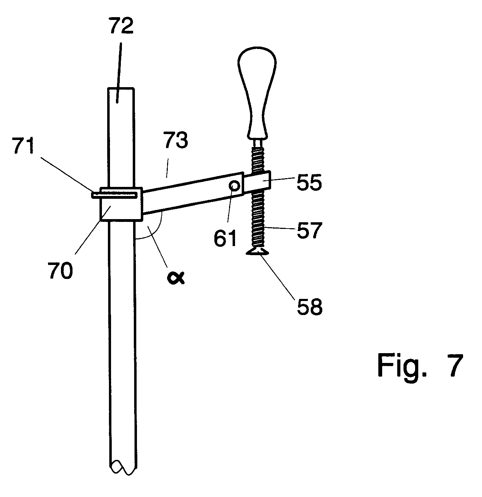

Beim Ausführungsbeispiel nach Fig.7 ist an der Querstrebe 73 ein Lager 70 vorgesehen, mit welchem diese längsverschiebbar auf der Längsstrebe 72 gelagert ist. Zum Festlegen dieser beiden Streben ist am Lager 70 der Querstrebe 73 eine Klemmeinrichtung 71 angeordnet.

## Patentansprüche

1. Schraubzwinge(51), mit einer einen kreisförmigen, an die Bohrungen (9) eines Tisches oder dergleichen Werkstückes angepaßten Querschnitt aufweisenden Längsstrebe(52,72) und einer an einer Querstrebe(53,73) angeordneten Schraubenspindel(57) zum Feineinstellen und Aufbringen der Spannkraft, **dadurch gekennzeichnet** daß die Querstrebe(53,73) zweiteilig ausgebildet ist, mit einem äußeren Stützrohr(54) und einer inneren darin längsverschiebbar gelagerten Strebe(55), welche die Schraubenspindel(57) trägt, daß die Querstrebe(53) am Ende der Längsstrebe(52) fest angeordnet ist und mit dieser einen stumpfen Winkel von etwa 100° einschließt.

2. Schraubzwinge nach Anspruch 1, **dadurch gekennzeichnet**, daß innerhalb der Querstrebe(53,73) eine Rückholfeder(62) angeordnet ist, welche im unbelasteten Zustand die Strebe(55) in der eingefahrenen Stellung innerhalb des Stützrohres(54) hält.

3. Schraubzwinge nach Anspruch 1 oder 2, **dadurch gekennzeichnet**, daß die innere Strebe(55) der Querstrebe(53,73) mit einer langlochförmigen Ausnehmung(60) versehen ist, in welche ein im Stützrohr(54) befestigter Stift (61) eingreift und damit die Querbewegung der inneren Strebe(55) begrenzt.

4. Schraubzwinge nach Anspruch 3, **dadurch gekennzeichnet**, daß innerhalb der langlochförmigen Ausnehmung(60) eine Druckfeder(62) angeordnet ist, welche als Rückholfeder dient.

5. Schraubzwinge nach einem der vorhergehenden Ansprüche, **dadurch gekennzeichnet**, daß an der Querstrebe(73) eine Klemmeinrichtung(71) zum Festlegen der auf der Längsstrebe(72) verschiebbar gelagerten Querstrebe an der Längsstrebe(72) vorgesehen ist.

## Claims

1. Screw clamp (51) with a longitudinal beam (52, 72) that has a circular cross-section corresponding to the holes (9) drilled in a table or a similar object and with a screw spindle (57) located on a transverse beam (53, 73) for the precise setting and application of the clamping force, **wherein** the transverse beam (53, 73) consists of two parts, an outer support pipe (54) and an inner beam (55) provided inside the support pipe (54) in such a way that it can be moved longitudinally, which supports the screw spindle (57), and **wherein** the transverse beam (53) is fixed to the end of the longitudinal beam (52) and forms an obtuse angle of about 100° with the latter.

2. Screw clamp according to claim 1, **wherein** a retracting spring (62) is provided inside the transverse beam (53, 73), which in its no-load position makes sure that the beam (55) is kept in its retracted position inside the support pipe (54).

3. Screw clamp according to claim 1 or 2, **wherein** the inner beam (55) of the transverse beam (53, 73) is provided with an oblong opening (60), which is engaged by a pin (61) that is attached to the support pipe (54) and thus limits the transverse movement of the inner beam (55).

4. Screw clamp according to claim 3, **wherein** a compression spring (62) is located inside the oblong opening (60) and acts as a retracting spring.

5. Screw clamp according to one of the previous claims, **wherein** a clamping unit (71) is provided on the transverse beam (73) to secure the transverse beam that can be moved along the longitudinal beam (72) in position on the longitudinal beam (72).

## Revendications

1. Serre-joint (51) comportant un montant longitudinal (52, 72) présentant une section transversale circulaire adaptée aux perçages (9) d'une table ou d'un élément analogue et une tige filetée (57) placée sur un montant transversal (53, 73) pour ajuster finement et appliquer la force de serrage, caractérisé en ce que le montant transversal (53, 73) est réalisé en deux parties et comprend un tube de support extérieur (54) dans lequel coulisse longitudinalement une tige (55) portant la tige filetée (57), et en ce que le montant transversal (53) est fixé à l'extrémité du montant longitudinal (52) et forme avec ce dernier un angle obtus d'environ 100°.

2. Serre-joint selon la revendication 1, caractérisé en ce qu'à l'intérieur du montant transversal (53, 73) est placé un ressort de appel (62) qui, lorsqu'il est détendu, maintient la tige (55) dans la position rentrée, à l'intérieur du tube de support (54).

3. Serre-joint selon la revendication 1 ou 2, caractérisé en ce que la tige interne (55) du montant transversal (53, 73) est munie d'un évidement en forme de trou oblong (60), dans lequel est logé un tenon (61) fixé dans le tube de support (54), ce qui limite le mouvement transversal de la tige interne (55).

4. Serre-joint selon la revendication 3, caractérisé en ce qu'à l'intérieur de l'évidement en forme de trou oblong (60) est placé un ressort de pression (62) qui sert de ressort de rappel.

5. Serre-joint selon l'une des revendications précédentes, caractérisé en ce que sur le montant transversal (73) est prévu un dispositif de serrage (71) pour fixer sur le montant longitudinal (72) le montant transversal monté de façon coulissante sur le montant longitudinal (72).
